# EUROPÄISCHE PATENTSCHRIFT

(11) **EP 4 195 446 B1**
(45) Veröffentlichungstag und Bekanntmachung des Hinweises auf die Patenterteilung: **06.03.2024**
(21) Anmeldenummer: 22205079.1
(22) Anmeldetag: 02.11.2022
(51) Int. Cl.: H02J 7/00, H02J 50/10, H02J 50/90, H04B 1/3877, H04M 1/11, H04B 1/3883, H04M 1/04

(54) **INDUKTIVES LADEGERÄT UND SET AUS INDUKTIVEM LADEGERÄT UND KUNSTSTOFFEINLEGETEIL**
INDUCTIVE CHARGER AND SET COMPRISING AN INDUCTIVE CHARGER AND A PLASTIC INSERTION PART
CHARGEUR INDUCTIF ET ENSEMBLE DE CHARGEUR INDUCTIF ET PIÈCE D'INSERTION EN PLASTIQUE

(30) Priorität: 05.11.2021 DE 102021128858
(43) Veröffentlichungstag der Anmeldung: 14.06.2023
(73) Patentinhaber: BURY Sp. z o.o., 39-300 Mielec (PL)
(72) Erfinder: Spielmann, Alexander, 32052 Herford (DE)
(74) Vertreter: Günther, Constantin

(56) Entgegenhaltungen:
- WO-A1-2017/072163
- US-A1- 2015 162 767

## Beschreibung

Die Erfindung betrifft ein induktives Ladegerät mit einem Ladeschalengrundkörper, der eine Spulenanordnung zum elektronischen Laden elektronischer Geräte und eine den Spulenkörper überdeckende Ladeschalenoberfläche hat, und mit einer Auflagematte, die zur Auflage auf die Ladeschalenoberfläche ausgebildet ist.

Die Erfindung betrifft weiterhin ein Set aus einem solchen induktiven Ladegerät und einem Kunststoffeinlegeteil.

Halterungen für elektronische Geräte werden beispielsweise als Ablage für Mobiltelefone in Fahrzeugen genutzt, um tragbare elektronische Geräte, wie Mobiltelefone, an einer definierten Stelle zu halten und gegen Verrutschen oder Herausfallen zu sichern. Insbesondere bei einem Unfall treten hohe Beschleunigungskräfte auf, die zu einem unkontrollierten Herumfliegen des Mobiltelefons im Fahrzeuginneren und damit zu einer Gefährdung von Insassen führen können.

Induktive Ladegeräte werden über die Haltefunktion hinaus zum elektronischen Laden tragbarer elektronischer Geräte über magnetische Induktion genutzt. Das zu ladende elektronische Gerät muss dabei auf einer möglichst exakt vordefinierten Position liegen, damit sich die in induktiver Kopplung befindlichen Sende- und Empfangsspulen möglichst genau gegenüberstehen, um damit die optimale Energieübertragungsleistung zu erreichen.

US 2007/0182367 A1 offenbart ein induktives Ladegerät mit Permanentmagneten im Ladegerät und dem zu ladenden elektronischen Gerät. Die Pole der Permanentmagnete sind parallel zur Ladeschalenoberfläche und das magnetische Feld senkrecht zur Ladeschalenoberfläche angeordnet. Beim Auflegen des elektronischen Geräts auf die Ladeschalenoberfläche ziehen die korrespondierenden Magnete das elektronische Gerät in eine auf die Spulen angepasste Ausrichtung.

US 2015/0171649 A1 offenbart ein Ladegerät mit einem zum induktiven Laden ausgebildeten Spulenträger, der mithilfe von Magneten auf einen elektronische Kontakte aufweisenden Grundkörper ausrichtbar ist.

EP 3 151 366 A1 offenbart ein Ladegerät zum induktiven Laden elektronischer Geräte, bei dem ein Permanentmagnet zentrisch im Innenraum einer die Permanentmagneten umgebenden Spule unterhalb der Ladeschalenoberfläche aufgenommen ist.

WO2017072163 A1 offenbart eine Halte- und Ladevorrichtung für z.B. Smartphones, mit auf der Gehäuseschale oder in der Magnetausnehmung angeordnetem Permanentmagneten zur Bildung eines Ringsegments, das in der Ebene offen ist und einen Spalt zur Unterbrechung von Induktionsströmen im Ringsegment bildet.

Ausgehend hiervon ist es Aufgabe der vorliegenden Erfindung, ein verbessertes induktives Ladegerät zum induktiven Laden elektronischer Geräte zu schaffen.

Die Aufgabe wird mit dem induktiven Ladegerät mit dem Merkmal des Anspruchs 1 und dem Set mit dem Merkmal des Anspruchs 9 gelöst. Vorteilhafte Ausführungsformen sind in den Unteransprüchen beschrieben.

Es wird vorgeschlagen, dass ein Magneteinlegeteil mit Magneten und einer Befestigungskontur zur Auflage auf die Ladeschalenoberfläche und zur Befestigung an der Ladeschalenoberfläche mittels der Befestigungskontur ausgebildet ist und die Auflagematte des gattungsgemäßen induktiven Ladegerätes an der zur Auflage auf der Ladeschalenoberfläche vorgesehenen Unterseite eine Ausnehmung zur Aufnahme des Magneteinlegeteils hat.

Damit wird erreicht, dass die Magnete näher an dem elektronischen Gerät angeordnet sind und dass die Haltekraft größer wird. Zum anderen ist der Abstand der nunmehr oberhalb der Ladeschalenoberfläche angeordneten Magnete zur Spulenanordnung größer, sodass ein nachteiliger Einfluss der Magnete auf die induktive Kopplung zum Energietransfer geringer ist.

Dadurch, dass das Magneteinlegeteil mit der Befestigungskontur an der Ladeschalenoberfläche mit dem Ladeschalengrundkörper befestigt ist, werden die beim Abnehmen des elektronischen Gerätes wirkenden magnetischen Kräfte auf das Magneteinlegeteil von dem Ladeschalengrundkörper aufgefangen. Auf die Auflagematte wird damit keine signifikante Kraft ausgeübt, die diese von der Ladeschalenoberfläche wegbewegen würde. Diese kann daher relativ einfach durch Form- und/oder Reibschluss auf der Ladeschalenoberfläche bzw. an dem Ladeschalengrundkörper gehalten werden.

Durch die Aufnahme des Magneteinlegeteils in eine Ausnehmung der Auflagematte wird der Abstand der Magnete zum auf der Auflagematte aufliegenden elektronischen Gerät, das induktiv geladen werden soll, verkürzt. Dies erhöht die Haltekraft des elektronischen Gerätes im Vergleich zur Anordnung der Magnete in dem Ladeschalengrundkörper unterhalb der Ladeschalenoberfläche, wie dies im Stand der Technik der Fall ist.

Der Ladeschalengrundkörper kann eine Rastöffnung an der Ladeschalenoberfläche haben, die von der Ladeschalenoberfläche in den Innenraum des Ladeschalengrundkörpers hineinragt. Das Magneteinlegeteil kann eine zum Einlegen in die Rastöffnung ausgebildete abragende Befestigungskontur haben, wobei die Rastöffnung und die Befestigungskontur zur formschlüssigen Verrastung miteinander ausgebildet sind.

Auf diese Weise kann das Magneteinlegeteil mit seiner zum Ladeschalengrundkörper im aufgesteckten Zustand hin abragenden Befestigungskontur in die Rastöffnung eingesteckt und dort mit dem Ladeschalengrundkörper verrastet werden.

Unter einer Verrastung wird eine formschlüssige Verbindung verstanden, die durch Zusammenwirken der Anschlagflächen in der Rastöffnung und in der Befestigungskontur hergestellt wird, in die das Magneteinlegeteil auf den Ladeschalengrundkörper aufgesteckt ist.

Die abragende Befestigungskontur kann beispielsweise als Rohrstück ausgebildet sein.

Die Befestigungskontur kann federelastische Rastarme mit vorstehenden Rastnasen zur Bildung eines Formschlusses mit Anschlagflächen der Rastöffnung des Ladeschalengrundkörpers haben.

Die Verrastung kann vorzugsweise lösbar sein, sodass das Magneteinlegeteil durch Aufhebung des Formschlusses beispielsweise mithilfe von federelastischen Rastarmen vom Ladeschalengrundkörper wieder abgenommen werden kann.

An dem Magneteinlegeteil kann eine Anzahl von Magneten verteilt angeordnet und mit dem Magneteinlegeteil verbunden sein. So kann das Magneteinlegeteil Mulden haben, die jeweils zur Aufnahme eines Permanentmagneten ausgebildet sind. Diese Magnete können dann mit dem Magneteinlegeteil beispielsweise formschlüssig durch einrastende Anschlagkonturen und/oder stoffschlüssig beispielsweise durch Verkleben mit dem Grundkörper des Magneteinlegeteils verbunden werden.

Vorteilhaft ist es, wenn eine Anzahl von Magneten auf einer gemeinsamen Kreisbahn verteilt angeordnet sind. Gleichermaßen sind auch andere geometrische Anordnungen der Magnete denkbar, wie beispielsweise die Anordnung der Magnete auf einer dreieckigen, viereckigen oder vieleckigen Bahnkontur. Diese Anordnung der Magnete soll dann bevorzugt an die Anordnung von Magneten in einem korrespondierenden elektronischen Gerät angepasst sein, das in seinem Gerätegehäuse ebenfalls eine Magnetanordnung hat.

Das Magneteinlegeteil kann Kühlkanäle zur Leitung eines Luftstroms haben, die mit Luftdurchlassöffnungen in der Auflagematte und mit mindestens einer Luftdurchlassöffnung in dem Ladeschalengrundkörper zusammenwirkend ausrichtbar sind. Auf diese Weise kann ein Luftstrom kommunizierend zur Kühlung des zu ladenden elektronischen Gerätes von diesem durch die Luftdurchlassöffnungen in der Auflagematte und die Luftkanäle in dem Magneteinlegeteil zu den Luftdurchlassöffnungen in dem Ladeschalengrundkörper hinein erzwungen werden. Hierbei kann in dem Luftkanal vorzugsweise im Ladeschalengrundkörper ein Lüfter zusätzlich angeordnet sein, um die sich beim induktiven Laden erwärmende Luft vom elektronischen Gerät zum Ladeschalengrundköper abzusaugen oder einen kühlenden Luftstrom von der Umgebung des Ladeschalengrundkörpers durch die dortige mindestens eine Luftdurchlassöffnung und die Kühlkanäle des Magneteinlegeteils hindurch über die Luftdurchlassöffnungen in der Auflagematte an das elektronische Gerät zu führen.

Die Befestigungskontur des Magneteinlegeteils kann einen Kühlkanal bilden. Vorzugsweise kann der Ladeschalengrundkörper eine Bohrung haben, die beispielsweise im Zentrum der Ladeschalenoberfläche ausmündet, wobei eine dort hineinragende zylinderförmige Befestigungskontur des Magneteinlegeteils gleichzeitig als Kühlkanal dient.

Um das induktive Ladegerät an unterschiedliche elektronische Geräte wahlweise beispielsweise durch den Endnutzer anpassen zu können, ist es vorteilhaft, ein Set mit mindestens einem Magneteinlegeteil und mindestens einem Kunststoffeinlegeteil bereitzustellen, wobei das Kunststoffeinlegeteil eine mit dem Magneteinlegeteil vergleichbare Kontur hat. So kann das Grundgehäuse von Magneteinlegeteil und Kunststoffeinlegeteil aus einem Kunststoffgrundkörper bestehen. Das Magneteinlegeteil ist mit an dem Grundkörper angebrachten Magneten versehen. Das Kunststoffeinlegeteil ist im Vergleich nicht mit Magneten ausgestattet. Es kann sich hierbei einfach um den Grundkörper des Magneteinlegeteils handeln, nur dass dieser nicht mit Magneten ausgestattet ist.

Auf diese Weise kann das induktive Ladegerät wahlweise an mit korrespondierenden Magneten ausgestatteten elektronischen Geräten durch Aufstecken eines Magneteinlegeteils auf den Ladeschalengrundkörper oder an ohne Magnete ausgestattete elektronische Geräte durch Aufstecken eines Kunststoffeinlegeteils auf den Ladeschalengrundkörper angepasst werden.

Mithilfe dieses Kunststoffeinlegeteils wird ein störender Einfluss der Magnete auf die Ladeeffizienz verhindert. Dies ist für den Fall sinnvoll, wenn das zu ladende elektronische Gerät ohnehin nicht mit Magneten ausgestattet ist und damit die Magnete eines Magneteinlegeteils keine Wirkung zum Halten und Ausrichten des elektronischen Gerätes haben.

In dem Set können auch mehrere unterschiedliche Magneteinlegeteile enthalten sein, die jeweils durch unterschiedliche Anordnung der Magnete an den Grundkörper zur Mitwirkung mit unterschiedlichen elektronischen Geräten ausgebildet sind, bei denen sich die Magnetanordnung im Gerätegehäuse voneinander unterscheidet.

Bei dem Set kann die Auflagematte gleich sein, da die Außenkontur des mindestens einen Magneteinlegeteils und des Kunststoffeinlegeteils vergleichbar ist. Bevorzugt ist dies der Fall, wenn das mindestens eine Magneteinlegeteil und das Kunststoffeinlegeteil denselben Grundkörper nutzen.

Für die Bereitstellung unterschiedlicher Magneteinlegeteile mit unterschiedlicher Anordnung von Magneten können diese auch aus demselben Grundkörper bestehen, der für die unterschiedliche Anordnung von Magneten entsprechende angepasste Aufnahmekonturen hat, sodass der Grundkörper unterschiedlich mit Magneten bestückt werden kann.

Die Erfindung wird nachfolgend anhand der beigefügten Zeichnungen näher erläutert. Es zeigen:
- Figur 1: - perspektivische Explosionsansicht eines induktiven Ladegerätes;
- Figur 2: - perspektivische Ansicht auf die Draufsicht eines Magneteinlegeteils;
- Figur 3: - perspektivische Unteransicht des Magneteinlegeteils mit Befestigungskontur;
- Figur 4: - perspektivische Ansicht des Ladeschalengrundkörpers mit aufgestecktem Magneteinlegeteil;
- Figur 5: - perspektivische Ansicht auf das induktive Ladegerät mit aufgestecktem Magneteinlegeteil und Auflagematte;
- Figur 6: - Schnittansicht des induktiven Ladegerätes aus Figur 5.

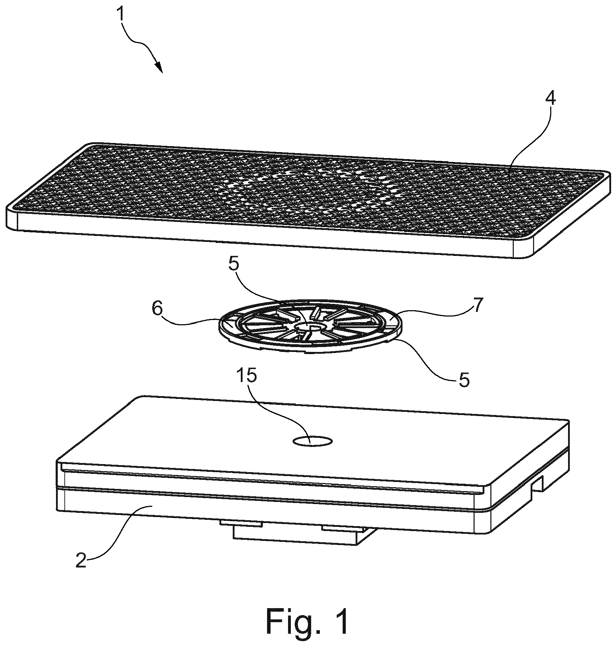

Figur 1 zeigt eine perspektivische Explosionsansicht eines induktiven Ladegerätes 1, das einen Ladeschalengrundkörper 2 hat, in den in an sich bekannter Weise eine nicht dargestellte Spulenanordnung zum induktiven Laden eines elektronischen Gerätes, beispielsweise eines Mobiltelefons, eingebaut ist. Die Spulenanordnung ist aber mit einer Ladeelektronik verbunden, die ebenfalls in dem Ladeschalengrundkörper 2 eingebaut sein kann.

Der Ladeschalengrundkörper 2 hat eine ebene Ladenschalenoberfläche 3, auf die das elektronische Gerät nicht direkt aufgelegt wird. Vielmehr ist eine Auflagematte 4 beispielsweise aus einem Gummimaterial vorgesehen, die an die Größe und Kontur und der Ladeschalenoberfläche 3 angepasst ist und mit dem Ladeschalengrundkörper 2 oder einer diesen umgebenden Gehäusestruktur formschlüssig verbindbar ist. Auf diese Weise wird die Auflagematte 4 an dem Ladeschalengrundkörper 2 lösbar gehalten.

Ein auf die Auflagematte 4 aufgelegtes elektronisches Gerät wird durch Reibschluss an dem induktiven Ladegerät gehalten. Beim Abbremsen und Beschleunigen kann dieses aber abrutschen oder davon abheben und umherfliegen.

Um nun ein zu ladendes tragbares elektronisches Gerät fest an dem Ladeschalengrundkörper 2 zu halten und gegebenenfalls dabei noch auf die Sende- und Empfangsspule aufeinander auszurichten, ist ein Magneteinlegeteil 5 vorgesehen, das an seiner Oberseite in Aufnahmemulden bzw. Vertiefungen 6 mehrere Magnete 7 hat. Diese Magnete 7 können beispielsweise Permanentmagnete sein.

In dem dargestellten Ausführungsbeispiel sind die Magnete 7 auf einer gemeinsamen Kreisbahn im Abstand voneinander in einem radialen Umfang um das Zentrum 8 des Magneteinlegeteils 5 herum angeordnet. Gleichermaßen sind auch andere geometrische Anordnungen denkbar, wie beispielsweise die Anordnung der Magnete 7 auf einer dreieckigen, viereckigen oder vieleckigen Bahnkontur.

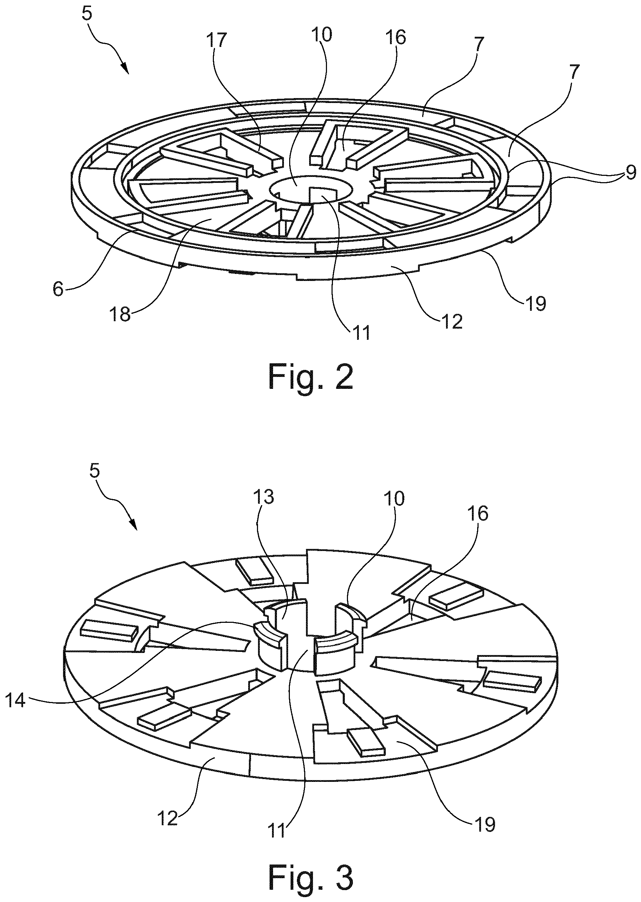

Dies ist in Figur 2 erkennbar. Dort ist ein Ausführungsbeispiel eines Magneteinlegeteils 5 dargestellt, das sechs in einem gemeinsamen Radius auf einer Kreisbahn angeordnete Magnete 7 hat. Diese Permanentmagnete 7 sind auf einer Kreisbahn mit einem Radius angeordnet, die bevorzugt an die Anordnung korrespondierender Magnete in dem zu ladenden tragbaren elektronischen Gerät (z. B. Smartphone) angepasst ist. Dadurch ist sichergestellt, dass die Magnete 7 jeweils zu den Gegenpolen an die Magnete im tragbaren elektronischen Gerät optimal angeordnet sind und das zu ladende elektronische Gerät mit einer ausreichenden Kraft gehalten wird.

Die Anordnung der Magnete 7 ist so gewählt, dass sie sich im Abstand von der unterhalb der Ladeschalenoberfläche 3 im Ladeschalengrundkörper 2 angeordneten Sendespule befinden, damit der Energietransfer durch die Magnete 7 möglichst wenig beeinflusst wird.

Die Magnete 7 können scheibenförmige Permanentmagnete sein, die mit ihrer Grundfläche parallel zur Ladeschalenoberfläche 3 ausgerichtet sind.

Erkennbar ist, dass die Magnete 7 in einer Ausnehmung eingelegt sind, welche durch Stege 9 begrenzt wird.

Erkennbar ist weiterhin, dass im Zentrum des Magneteinlegeteils 5 eine Befestigungskontur 10 vorgesehen ist, die sich an eine Öffnung 11 anschließt.

Das Magneteinlegeteil 5 hat hierzu einen Kunststoffgrundkörper 12, der die Stege 9, die Öffnung 11 und die von der Unterseite abragende Befestigungskontur 10 aufweist.

Die Befestigungskontur 10 ist in einem Ausführungsbeispiel in der Figur 3 deutlicher erkennbar. Die Figur 3 zeigt die Unterseite des Magneteinlegeteils 5 bzw. des Grundkörpers 12.

Deutlich wird, dass die Befestigungskontur 10 aus federelastischen Rastarmen 13 gebildet ist, die von der Unterseite des Grundkörpers 12 abragen und an ihren Enden seitlich vorstehende Rastnasen 14 haben.

Auf diese Weise kann beim Einstecken der Befestigungskontur 10 in die in der Figur 1 dargestellte Rastöffnung eine formschlüssige Verbindung des Magneteinlegeteils 5 bzw. des Grundkörpers 12 mit dem Ladeschalengrundkörper 2 hergestellt werden.

Erkennbar ist weiterhin, dass der Grundkörper 12 des Magneteinlegeteils 5 Kühlkanäle 16 hat, die aus Öffnungen und aus Stegen 17 gebildet werden, die von einer Grundfläche 18 des Grundkörpers 12 abragen.

Erkennbar ist, dass die Kühlkanäle 16 auch an der Unterseite des Grundkörpers 12 des Magneteinlegeteils 5 durch Vertiefungen bzw. Mulden 19 radial nach außen geführt sind, sodass auch zwischen der Ladeschalenoberfläche 3 und der Unterseite des Grundkörpers 12 radial nach außen führende Kühlkanäle von einem Luftstrom bereitgestellt werden, wenn das Magneteinlegeteil 5 bzw. der Grundkörper 12 auf die Ladeschalenoberfläche 3 des induktiven Ladegerätes aufgesteckt ist.

Diese Vertiefungen 19 sind auch aus der Figur 2 erkennbar.

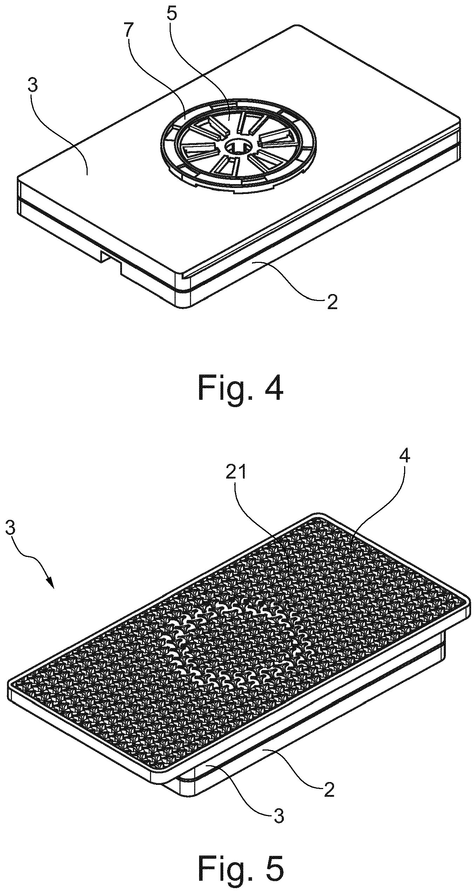

Figur 4 zeigt den Ladeschalengrundkörper 2 mit der Ladeschalenoberfläche 3 aus Figur 1 mit dem auf die Ladeschalenoberfläche 3 aufgesteckten Magneteinlegeteil 5. Erkennbar ist, dass das Magneteinlegeteil 5 von der Ladeschalenoberfläche 3 nach oben abragt, sodass sich die Magnete 7 im Abstand zu der unterhalb der Ladeschalenoberfläche 3 befindlichen mindestens einen Spule (nicht sichtbar) befindet.

Figur 5 zeigt die perspektivische Ansicht des induktiven Ladegerätes 1, wobei nunmehr eine Auflagematte 4 auf die Ladeschalenoberfläche 3 des Ladeschalengrundkörpers 2 aufgelegt ist. Die Auflagematte 4 überdeckt die Ladeschalenoberfläche 3 und das darauf aufgesteckte Magneteinlegeteil 5. Es ist erkennbar, dass die Auflagematte 4 Luftdurchlassöffnungen 21 hat, die über die Fläche der Auflagematte 4 verteilt angeordnet sind.

Das Magneteinlegeteil 5 wird in eine nur schemenhaft erkennbare Ausnehmung einer Unterseite der Auflagematte 4 aufgenommen, sodass der Abstand zwischen der oben sichtbaren Auflagefläche der Auflagematte 4 und der auf der Ladeschalenoberfläche 3 aufliegenden Unterseite der Auflagematte 4 größer ist als der Abstand zwischen der oberen Auflagefläche der Auflagematte 4 und der Oberseite der Magnete 7. Dadurch wird die magnetische Haltekraft der Permanentmagnete 7 des Magneteinlegeteils 5 signifikant im Vergleich zu einer Anordnung der Permanentmagnete 7 in der Ladeschalenoberfläche 3 oder unter der Ladeschalenoberfläche 3 in dem Ladeschalengrundkörper 2 erhöht.

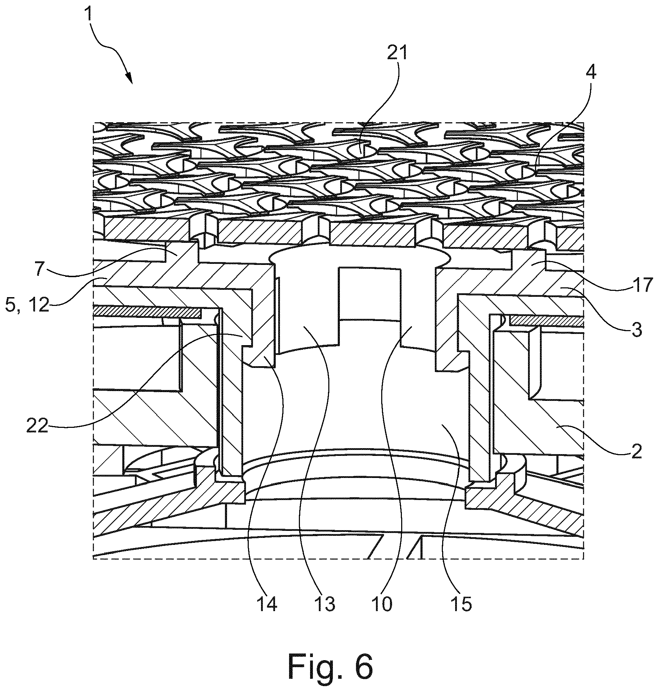

Figur 6 zeigt eine perspektivische Seiten-Schnittansicht durch das induktive Ladegerät 1 aus Figur 5. Erkennbar ist dabei, dass die Auflagematte 4, die beispielsweise aus einem Gummimaterial gebildet ist, eine Struktur mit einer Vielzahl von Vertiefungen mit Luftdurchlassöffnungen 21 hat, die von der Oberseite der Ladeschalenoberfläche 3 zu der den aufgelegten Zustand weisenden Unterseite führen.

Aus der durch die Rastöffnung 15 des Ladeschalengrundkörpers 2 gehenden Schnittdarstellung ist erkennbar, dass die federelastischen Rastarme 13 der Befestigungskontur 10 mit ihren vorstehenden Rastnasen 14 einen Formschluss mit Anschlagkanten 22 in der Rastöffnung 15 bilden. Die Anschlagkanten 22 werden durch einen Hinterschnitt bzw. eine radiale Verjüngung der Rastöffnung in Richtung der Ladeschalenoberfläche 3 gebildet.

Auf diese Weise wird ein Luftkanal zum Abführen von Abwärme bereitgestellt.

Die Sendespule des induktiven Ladegerätes 1 kann um die zentrale Rastöffnung 15 herum in dem erkennbaren Freiraum angeordnet sein, der durch den Deckelabschnitt mit der Ladeschalenoberfläche 3 und einem Boden des Ladeschalengrundkörpers 2 gebildet und durch die Seitenwände begrenzt ist.

Eine Sendespule kann aber auch in den Innenraum der Rastöffnung 15 aufgenommen werden.

Die bevorzugt aus Elastomermaterial gebildete (elastische) Auflagematte 4 ist auf die Ladeschalenoberfläche 3 aufgelegt und kann zusätzlich um die Außenkanten der Ladeschalenoberfläche 3 herumgewölbt sein.

Sie hat an ihrer Unterseite eine vorzugsweise kreisförmige Ausnehmung (Vertiefung, Aussparung, Mulde usw.), die das Magneteinlegeteil 5 vollständig aufnehmen kann. Die Auflagematte 4 sollte so aus einem derart festen Material ausgebildet sein, dass sie im aufgelegten Zustand auch ohne Magneteinlegeteil 5 nur schwer durchdrückbar ist.

Ansonsten ist auch denkbar, ein Kunststoffeinlegeteil, das beispielsweise aus dem Grundköper 12 ohne eingelegte Magnete gebildet ist, auf die Ladeschalenoberfläche 3 aufzurasten, wenn kein Bedarf an zusätzlichen Magneten besteht und das induktive Ladegerät 1 für ein elektronisches Gerät ohne Magnete konfiguriert werden soll.

Bei der Ausbildung des Magneteinlegeteils 5 wird der Grundkörper 12 mit den Permanentmagneten 7 versehen, indem diese in die durch Rippen 9 begrenzte Aussparung 6 eingelegt und dort form- und/oder stoffschlüssig verbunden werden. Die Magnete 7 können mit dem Grundkörper 12 beispielsweise verschweißt oder verklebt werden. Denkbar ist es auch, dass die Rippen 9 Rastkonturen zur Rastaufnahme der Magnete 7 haben, sodass diese einen Formschluss mit dem Grundkörper 12 bilden.

Durch die Verrastung des Magneteinlegeteils 5 bzw. des Grundkörpers 12 an dem Ladeschalengrundkörper 2 mithilfe der Befestigungskontur 10 ist das Magneteinlegeteil 5 bzw. der Grundkörper 12 zwar lösbar, aber dennoch so fest an dem Ladeschalengrundkörper 2 gehalten, dass sich das Magneteinlegeteil 5 nur mit einer höheren Kraft als die bei der magnetischen Kopplung eines elektronischen Gerätes mit dem Magneteinlegeteil 5 wirkende Magnetkraft von dem Ladeschalengrundkörper 2 lösen lassen kann.

Der Abstand zwischen der Auflageoberseite der Auflagematte 4 und der Oberseite der Magnete 7 beträgt vorzugsweise weniger als 1 mm, wodurch eine entsprechend hohe Anziehungskraft gewährleistet ist.

Die Rastöffnung 15, die aus dem Ladeschalengrundkörper 2 ausmündet und in das Magneteinlegeteil 5 bzw. das ohne Magnet versehene Kunststoffeinlegeteil 12 eingeclipst wird, kann auch als Luftaustrittsöffnung zur Kühlung des zu ladenden elektronischen Gerätes während des Ladevorgangs verwendet werden. Hierzu sind, wie insbesondere in Figur 6 erkennbar ist und oben bereits beschrieben wurde, innerhalb der Elastomerauflagematte 4 kleine Luftkanäle mit Luftdurchführungsöffnungen 21 eingebracht, die die Luft von der zentralen Rastöffnung 15 hin zu den Rändern der Auflagematte 4 weiterleiten und dort ausströmen lassen. Das Magneteinlegeteil 5 bzw. der Grundkörper 12 besitzt zusätzlich radial angeordnete Luftkanäle 16, 19, die die Luft von der zentralen Rastöffnung 15 zu den Kanälen der Auflagematte 4 weiterleiten, wo sie dann an den Rändern der Auflagematte 4 nach außen wegströmen.

In einer anderen Ausführung kann die Strömungsrichtung umgekehrt sein, sodass die Luft von außen durch die Kanäle der Auflagematte 4 und dann durch die Kanäle des Magneteinlegeteils 5 in die zentrale Rastöffnung 15 gesaugt wird. Die von der Abwärme des zu ladenden elektronischen Gerätes leicht erwärmte Luft strömt dann innerhalb des induktiven Ladegerätes an anderen Komponenten vorbei, die ebenfalls Abwärme produzieren. Diese sind beispielsweise die Sendespule und die Leistungstransistoren, deren Abwärme auf Kühlrippen geleitet werden kann.

## Patentansprüche

1. Induktives Ladegerät (1) mit einem Ladeschalengrundkörper (2), der eine Spulenanordnung zum induktiven Laden elektrischer Geräte und eine den Spulenkörper überdeckende Ladeschalenoberfläche (3) hat, und mit einer Auflagematte (4), die zur Auflage auf die Ladeschalenoberfläche (3) ausgebildet ist, **gekennzeichnet durch** ein Magneteinlegeteil (5), das Magneten (7) und eine Befestigungskontur (10) hat und zur Auflage auf die Ladeschalenoberfläche (2) und zur Befestigung an der Ladeschalenoberfläche (3) mittels der Befestigungskontur (10) ausgebildet ist, und dass die Auflagematte (4) an der zur Auflage auf der Ladeschalenoberfläche (3) vorgesehenen Unterseite eine Ausnehmung zur Aufnahme des Magneteinlegeteils (5) hat.

2. Induktives Ladegerät (1) nach Anspruch 1, **dadurch gekennzeichnet, dass** der Ladeschalengrundkörper (2) eine Rastöffnung (15) an der Ladeschalenoberfläche (3) hat, die von der Ladeschalenoberfläche (3) in den Innenraum des Ladeschalengrundkörpers (2) hineinragt, und dass das Magneteinlegeteil (5) eine zum Einstecken in die Rastöffnung (15) ausgebildete, abragende Befestigungskontur (10) hat, wobei die Rastöffnung (15) und die Befestigungskontur (10) zur formschlüssigen Verbindung miteinander ausgebildet sind.

3. Induktives Ladegerät (1) nach Anspruch 2, **dadurch gekennzeichnet, dass** die abragende Befestigungskontur (10) als Rohrstück ausgebildet ist.

4. Induktives Ladegerät (1) nach Anspruch 2 oder 3, **dadurch gekennzeichnet, dass** die Befestigungskontur (10) federelastische Rastarme (13) mit vorstehenden Rastnasen (14) zur Bildung eines Formschlusses mit Anschlagflächen der Rastöffnung (15) des Ladeschalengrundkörpers (2) hat.

5. Induktives Ladegerät (1) nach einem der vorhergehenden Ansprüche, **dadurch gekennzeichnet, dass** eine Anzahl von Magneten (7) verteilt an dem Magneteinlegeteil (5) angeordnet ist und mit dem Magneteinlegeteil (5) verbunden ist.

6. Induktives Ladegerät (1) nach Anspruch 5, **dadurch gekennzeichnet, dass** die Magnete (7) auf einer gemeinsamen Kreisbahn verteilt angeordnet sind.

7. Induktives Ladegerät (1) nach einem der vorhergehenden Ansprüche, **dadurch gekennzeichnet, dass** das Magneteinlegeteil (5) Kühlkanäle (16) zur Leitung eines Luftstroms hat, die mit Luftdurchlassöffnungen in der Auflagematte (4) und mit mindestens einer Luftdurchlassöffnung in dem Ladeschalengrundkörper (2) zusammenwirkend ausrichtbar sind.

8. Induktives Ladegerät (1) nach Anspruch 7, **dadurch gekennzeichnet, dass** die Befestigungskontur (10) des Magneteinlegeteils (5) einen Kühlkanal (16) bildet.

9. Set aus induktivem Ladegerät (1) nach einem der vorhergehenden Ansprüche und einem Kunststoffeinlegeteil (12), das eine dem Magneteinlegeteil (5) vergleichbare Kontur hat und nicht mit Magneten ausgestattet ist, um wahlweise ein Magneteinlegeteil (5) zur Ausrichtung eines mit korrespondierenden Magneten ausgestatten elektronischen Gerätes oder ein Kunststoffeinlegeteil (12) zur Aufnahme eines ohne Magneten ausgestatteten elektronischen Gerätes zwischen Ladeschalenoberfläche (3) und Auflagematte (4) anzuordnen.

## Claims

1. Inductive charging device (1) with a charging shell base body (2) which has a coil arrangement for inductive charging of electrical devices and a charging shell surface (3) covering the coil body, and with a support mat (4) which is designed to rest on the charging shell surface (3), **characterized by** a magnet insert (5), which has magnets (7) and a fastening contour (10) and is designed to rest on the charging shell surface (2) and to be fastened to the charging shell surface (3) by means of the fastening contour (10), and in that the support mat (4) has a recess for receiving the magnetic insert (5) on the underside provided for resting on the charging shell surface (3).

2. Inductive charger (1) according to claim 1, **characterized in that** the charging shell base body (2) has a latching opening (15) on the charging shell surface (3), which projects from the charging shell surface (3) into the interior of the charging shell base body (2), and **in that** the magnet insert (5) has a projecting fastening contour (10) designed for insertion into the latching opening (15), the latching opening (15) and the fastening contour (10) being designed for positive connection to one another.

3. Inductive charger (1) according to claim 2, **characterized in that** the projecting fastening contour (10) is designed as a tubular piece.

4. Inductive charger (1) according to claim 2 or 3, **characterized in that** the fastening contour (10) has resilient latching arms (13) with protruding latching lugs (14) for forming a positive fit with stop surfaces of the latching opening (15) of the charging shell base body (2).

5. Inductive charger (1) according to one of the preceding claims, **characterized in that** a number of magnets (7) are arranged distributed on the magnet insertion part (5) and are connected to the magnet insertion part (5).

6. Inductive charger (1) according to claim 5, **characterized in that** the magnets (7) are arranged distributed on a common circular path.

7. Inductive charger (1) according to one of the preceding claims, **characterized in that** the magnet insertion part (5) has cooling channels (16) for conducting an air flow, which can be aligned cooperatively with air passage openings in the support mat (4) and with at least one air passage opening in the charging tray base body (2).

8. Inductive charger (1) according to claim 7, **characterized in that** the fastening contour (10) of the magnet insert (5) forms a cooling channel (16).

9. Set of inductive charger (1) according to one of the preceding claims and a plastic insert (12), which has a contour comparable to the magnetic insert (5) and is not equipped with magnets, in order to optionally arrange a magnetic insert (5) for aligning an electronic device equipped with corresponding magnets or a plastic insert (12) for receiving an electronic device equipped without magnets between the charging tray surface (3) and the support mat (4).

## Revendications

1. Chargeur inductif (1) comprenant un corps de base formant coque de charge (2) qui présente un ensemble de bobines, destiné à charger par voie inductive des appareils électriques, et une surface de coque de charge (3) recouvrant le corps de bobines, et comprenant une natte d'appui (4) conçue pour s'appuyer sur la surface de coque de charge (3),
**caractérisé par** une pièce d'insertion magnétique (5) qui présente des aimants (7) et un contour de fixation (10) et qui est conçue pour s'appuyer sur la surface de coque de charge (2) et pour être fixée à la surface de coque de charge (3) au moyen du contour de fixation (10), et
**caractérisé en ce que** la natte d'appui (4) présente, sur la face inférieure prévue pour s'appuyer sur la surface de coque de charge (3), un évidement destiné à recevoir la pièce d'insertion magnétique (5).

2. Chargeur inductif (1) selon la revendication 1,
**caractérisé en ce que** le corps de base formant coque de charge (2) présente une ouverture d'encliquetage (15) sur la surface de coque de charge (3), qui pénètre depuis la surface de coque de charge (3) jusque dans l'espace intérieur du corps de base formant coque de charge (2), et
**en ce que** la pièce d'insertion magnétique (5) présente un contour de fixation (10) en saillie conçu pour être enfiché dans l'ouverture d'encliquetage (15), l'ouverture d'encliquetage (15) et le contour de fixation (10) étant conçus pour être reliés entre eux par complémentarité de formes.

3. Chargeur inductif (1) selon la revendication 2,
**caractérisé en ce que** le contour de fixation (10) en saillie est conçu comme une pièce tubulaire.

4. Chargeur inductif (1) selon la revendication 2 ou 3,
**caractérisé en ce que** le contour de fixation (10) présente des bras d'encliquetage (13) élastiques à effet ressort ayant des ergots d'encliquetage (14) dépassants pour former une liaison par complémentarité de formes avec des surfaces de butée de l'ouverture d'encliquetage (15) du corps de base formant coque de charge (2).

5. Chargeur inductif (1) selon l'une des revendications précédentes, **caractérisé en ce qu'**un certain nombre d'aimants (7) sont disposés en étant répartis sur la pièce d'insertion magnétique (5) et sont reliés à la pièce d'insertion magnétique (5).

6. Chargeur inductif (1) selon la revendication 5,
**caractérisé en ce que** les aimants (7) sont disposés en étant répartis sur une trajectoire circulaire commune.

7. Chargeur inductif (1) selon l'une des revendications précédentes, **caractérisé en ce que** la pièce d'insertion magnétique (5) présente des canaux de refroidissement (16) pour conduire un flux d'air, qui peuvent être alignés en coopération avec des ouvertures de passage d'air dans la natte d'appui (4) et avec au moins une ouverture de passage d'air dans le corps de base formant coque de charge (2).

8. Chargeur inductif (1) selon la revendication 7,
**caractérisé en ce que** le contour de fixation (10) de la pièce d'insertion magnétique (5) forme un canal de refroidissement (16).

9. Ensemble constitué d'un chargeur inductif (1) selon l'une des revendications précédentes et d'une pièce d'insertion en matière plastique (12) qui présente un contour comparable à celui de la pièce d'insertion magnétique (5) et qui est dépourvue d'aimants, afin de disposer au choix une pièce d'insertion magnétique (5), destinée à aligner un appareil électronique pourvu d'aimants correspondants, ou une pièce d'insertion en matière plastique (12), destinée à recevoir un appareil électronique dépourvu d'aimants, entre la surface de coque de charge (3) et la natte d'appui (4).
